# EUROPÄISCHE PATENTSCHRIFT

(11) **EP 3 506 431 B1**
(45) Veröffentlichungstag und Bekanntmachung des Hinweises auf die Patenterteilung: **01.02.2023**
(21) Anmeldenummer: 18214329.7
(22) Anmeldetag: 20.12.2018
(51) Int. Cl.: H01R 4/18, H01R 4/20, H02G 1/14, H02G 15/18, H01R 4/62, H01R 11/32, H01R 13/502

(54) **LEITUNGSVERBINDER SOWIE HERSTELLVERFAHREN FÜR EINE ELEKTRISCHE VERBINDUNG**
LINE CONNECTOR AND METHOD FOR PRODUCING AN ELECTRICAL CONNECTION
CONNECTEUR DE CONDUITE AINSI QUE PROCÉDÉ DE FABRICATION D'UNE CONNEXION ÉLECTRIQUE

(30) Priorität: 27.12.2017 DE 102017131352
(43) Veröffentlichungstag der Anmeldung: 03.07.2019
(73) Patentinhaber: Lisa Dräxlmaier GmbH, 84137 Vilsbiburg (DE)
(72) Erfinder: Specht, Klaus, 84144 Geisenhausen (DE); Forstmeier, Christoph, 84028 Landshut (DE); Goetzmann, Christoph, 84137 Vilsbiburg, (DE)

(56) Entgegenhaltungen:
- EP-A2- 0 602 436
- DE-A1- 2 723 029
- DE-A1-102006 021 422
- DE-A1-102009 029 339
- DE-B3-102013 101 876
- GB-A- 1 536 163
- JP-U- H0 256 367
- JP-U- S5 081 992
- JP-U- S58 147 179
- US-A- 2 478 082
- US-A- 4 745 239

## Beschreibung

### Technisches Gebiet

Die vorliegende Erfindung betrifft einen Leitungsverbinder, der sich zur Stromverteilung auf mehrere Leitungen eignet. Ferner betrifft die Erfindung ein Verfahren zum Herstellen einer elektrischen Verbindung zwischen mehreren Leitungen.

### Stand der Technik

Beispielsweise aus der WO 2012/022763 A3 ist eine Verbindung zwischen zwei oder mehr elektrischen Leitungen bekannt, deren elektrische Leiter stoffschlüssig zu einem Durchgangs- oder Endknoten verbunden werden. Zum Verbinden der Leitungen kommt dabei ein Ultraschall-Schweißverfahren zum Einsatz, dessen Schweißqualität hauptsächlich durch Maschinenparameter der dazu verwendeten Ultraschall-Schweißvorrichtung beeinflusst werden kann. Nachteilig daran ist, dass die Schweißqualität beim Ultraschallschweißen neben den Maschinenparametern auch durch Materialoberflächen der Fügepartner, also den elektrischen Leitungen, oder Umwelteinflüsse beeinflusst werden kann, die sich bei diesem Verfahren aber nur unzureichend überwachen lassen. Des Weiteren ist nachteilig, dass die beim Ultraschallschweißen erzeugten Schallwellen auch auf an die Fügepartner angrenzende Bauteile übertragen werden und dort Schäden hervorrufen können.

Eine denkbare Alternative zum Ultraschallschweißen, die jedoch keine stoffschlüssige Verbindung schafft, ist das Crimpen. Dieses eignet sich jedoch nur bedingt für Aluminium-Leitungen, da das Aluminium durch sein ausgeprägtes Kriechverhalten zum Lockern der Crimpverbindung führen kann und die Oberflächenoxidationsschicht elektrisch isolierend wirkt. Insbesondere für das Verbinden von Aluminium-Leitungen besteht daher der Wunsch nach einer gegenüber dem Ultraschallschweißen verbesserten Möglichkeit zum stoffschlüssigen Verbinden von zwei oder mehr Leitungen.

Die US 4 745 239 A offenbart eine Mehrdrahtverbindungsvorrichtung, die ein allgemein röhrenförmiges, verformbares, elektrisch leitendes Gehäuse mit mehreren Öffnungen umfasst, die in ihrer Wand ausgebildet sind. Die Öffnungen sind entlang der Länge des Gehäuses axial voneinander beabstandet und jeweils so ausgelegt, dass sie einen Draht aufnehmen können, so dass er axial entlang einer Länge des Gehäuses verläuft.

Die GB1536163 zeigt eine Verbindungsanordnung für Koaxialkabel mit einem Satz metallischer Halbschalen und Verstärkungsrohren. Die Verbindung wird hergestellt, indem die Innenleiter der Kabel abgezogen, gebogen und mittels Crimpen verbunden werden, wobei die Halbschalen durch umgebogenen Komponenten der Halbschalen relativ zueinander fixiert werden.

Gemäß der DE 10 2009 029 339 A1 werden zwei elektrische Leiter aus verschiedenen Metallen oder verschiedenen Metalllegierungen miteinander verbunden, wobei hierfür ein Leiterverbinder vorgesehen ist, dessen Verbinderkörper ein plattiertes Blechteil mit zwei Außenbeschichtungen ist, deren Materialien entsprechend ausgewählt auf das Material der zu verbindenden elektrischen Leiter sind, wodurch eine homogene Verbindung zwischen dem elektrischen Leiter und dem Verbinderkörper sichergestellt und das Problem der elektrochemischen Korrosion verhindert wird.

Die EP 0 602 436 A2 zeigt einen vormontierten Leiter mit einer Abzweigkupplung, wobei ein Kontaktelement verwendet wird, auf dem sowohl Mittel für eine Crimpverbindung zum zu abzapfenden Leiter als auch Mittel für eine Crimpverbindung zum Abzweigleiter aufgebaut sind.

Aus der DE 10 2006 021 422 A1 ist ein Verfahren zum Herstellen eines rechteckigen Querschnitt aufweisenden Durchgangs- oder Endknotens aus elektrischen Leitern bekannt, das durch Kompaktieren und anschließendes Verschweißen der Leiter mittels Ultraschall in einem in Höhe und/oder Breite verstellbaren und im Querschnitt rechteckförmigen Verdichtungsraum einer Ultraschallschweißmaschine gewährleistet.

Die DE 27 23 029 A1 offenbart einen elektrischen Anschluss für emaillierte und glatte Drähte unter Verwendung einer Metallverbindungshülse, wobei die Hülse zusammen mit den Drahtenden durch Schweißelektroden zusammengedrückt und elektrisch erwärmt wird. Die Emailbeschichtung wird durch Quetschen und durch die schmelzende Zinnschicht zerstört, so dass die Drähte miteinander und mit der Hülse verbunden sind.

In der DE 102013 101876 B3 wird ein Verfahren zum stoffschlüssigen Fügen eines Kabels an ein Anschlusselement vorgeschlagen, bei dem ein Bündel von Einzelsträngen des Kabels über eine Eintrittsöffnung in eine Aufnahmehülse des Anschlusselements eingeführt wird, wobei die Aufnahmehülse ein von der Eintrittsöffnung abgewandtes Endstück aufweist und ein in das Bündel eingeführten Dorns im Bündel eine im Endstück angeordnete Eingriffskuhle erzeugt, wobei das die Eingriffskuhle aufweisende Endstück aufgeweitet ist und zum Herstellen einer stoffschlüssigen Fügeverbindung zumindest zwischen einer Teilanzahl der Einzelstränge mit der Innenwand des aufgeweiteten Endstückes dient.

Auch die JP S58 147179 U, JP S50 81992 U, JP H02 56367 U und US 2 478 082 A offenbaren jeweils Verbindungsanordnungen von elektrischen Leitungen.

### Beschreibung der Erfindung

Die Aufgabe der Erfindung ist es daher, unter Einsatz konstruktiv möglichst einfacher Mittel eine verbesserte Möglichkeit zum stoffschlüssigen Verbinden von zwei oder mehr elektrischen Leitungen zu schaffen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben.

Der Erfindung liegt der Gedanke zugrunde, zwei, drei, vier oder mehr, vorzugsweise im Querschnitt runde und/oder Litzen aufweisende, elektrische Leitungen elektrisch miteinander zu verbinden, indem die Leitungen abschnittsweise in Aufnahmehülsen eines gemeinsamen Leitungsverbinders aufgenommen und zumindest abschnittsweise mit diesen stoffschlüssig verbunden werden. Diese Verbindung kann beispielsweise ein Durchgangs- oder Endknoten sein.

Hierzu ist ein erfindungsgemäßer Leitungsverbinder nach Anspruch 1 zum unlösbaren miteinander Verbinden von zwei oder mehr elektrischen Leitungen vorzugsweise aus einem elektrisch leitfähigen Metallwerkstoff gefertigt und verfügt über wenigstens eine zum abschnittsweisen Aufnehmen der Leitungen ausgebildeten, metallische Aufnahmehülse. Die Aufnahmehülse weist ferner eine erste Durchgangsöffnung zum Einführen der jeweiligen Leitung sowie eine zweite Durchgangsöffnung zum Einführen eines Schweißwerkzeugs auf. Dabei kann der Leitungsverbinder abschnittsweise oder vollflächig galvanisiert, plasmabeschichtet oder lackiert sein. Es ist auch denkbar, dass der Leitungsverbinder Bestandteil einer Stromschiene eines elektrischen Stromverteilers im Bordnetz eines Kraftfahrzeugs ist. Zudem kann der Leitungsverbinder mit einem Kunststoffmaterial umgossen oder umspritzt sein, um so eine elektrische Isolierung nach außen bzw. einen Schutz vor mechanischen Einwirkungen zu erreichen.

Diese erfindungsgemäße Konfiguration bewirkt gleich mehrere vorteilhafte Effekte. So ermöglicht die Aufnahmehülse das stoffschlüssige Verbinden mittels Reibschweißen, wobei die dadurch geschaffene stoffschlüssige Verbindung durch die zweite Durchgangsöffnung optisch überprüfbar ist. Es lässt sich zudem mit einfachen konstruktiven Mitteln ein Verteiler- bzw. Splice-System schaffen. Durch das (Rühr-)Reibschweißen können je nach Ausführungsvariante vorteilhafterweise die folgenden Materialpaarungen elektrochemisch verträglich verbunden werden: Kupfer-Leiter mit einer Kupfer-Aufnahmehülse, ein Aluminium-Leiter mit einer Kupfer-Aufnahmehülse und ein Aluminium-Leiter mit einer Aluminium-Aufnahmehülse.

Eine vorteilhafte Weiterbildung der Erfindung sieht vor, dass die wenigstens eine Aufnahmehülse wenigstens eine dritte Durchgangsöffnung aufweist, deren Lochachse quer zur Lochsachse der ersten und/oder zweiten Durchgangsöffnung ausgerichtet ist. So können durch die erste und zweite Durchgangöffnung jeweils ein Bündel mit mehreren Leitungen so unter einem Winkel eingeführt werden, dass deren freigelegte Leiter im Bereich der dritten Durchgangsöffnung angeordnet sind. Durch die dritte Durchgangsöffnung kann dann das Schweißwerkzeug eingeführt werden, um zumindest die Leitungsenden zu plastifizieren.

Um z.B. auch Bündel von Leitungen mit größeren Durchmesser vollständig zu verschweißen, kann es vorteilhaft sein, wenn die wenigstens eine Aufnahmehülse eine vierte Durchgangsöffnung aufweist, deren Lochachse quer zur Lochachse der ersten und/oder zweiten Durchgangsöffnung ausgerichtet ist. So können die Leitungen in wenigstens zwei Bündel aufgeteilt und dann von mehreren Seiten her plastifiziert werden, um dadurch eine hohe Schweißqualität erreicht werden.

Erfindungsgemäß weist der Leitungsverbinder zwei oder mehr Aufnahmehülsen auf, die über wenigstens einen elektrisch leitfähigen Verbindungsabschnitt miteinander verbunden sind. Die zwei oder mehr Aufnahmehülsen können, vorzugsweise in wenigstens einer Reihe, nebeneinander angeordnet sein, so dass die Hülsenlängsachsen der Aufnahmehülsen parallel zueinander ausgerichtet sind. Da in jeder Aufnahmehülse vorzugsweise nur eine einzige Leitung angeordnet ist, sind unterschiedliche Materialpaarungen ohne Rücksicht auf deren Stellung in der elektrochemischen Spannungsreihe einfach zu realisieren.

Eine weitere vorteilhafte Weiterbildung der Erfindung sieht vor, dass sich der Innendurchmesser einer ersten Aufnahmehülse vom Innendurchmesser einer zweiten Aufnahmehülse unterscheidet. In anderen Worten können die Aufnahmehülsen einzeln oder gruppenweise unterschiedliche Innendurchmesser aufweisen, so dass mit einem einzigen Leitungsverbinder unterschiedliche Leitungsquerschnitte elektrisch miteinander verbunden werden können.

Es hat sich auch als vorteilhaft erwiesen, wenn sich wenigstens eine der Aufnahmehülsen von der ersten Durchgangsöffnung hin zur zweiten Durchgangsöffnung verjüngt. Dies kann auch mit einer Stufe ausgeführt sein. Dadurch kann die am Leitungslängsende abisolierte Leitung einerseits an ihrem Isolationsmantel klemmend gehalten werden, andererseits kann eine flächige Anlage zwischen dem freigelegten Leiter und der Aufnahmehülse erreicht werden.

Für eine Vorfixierung der Leitung in der Aufnahmehülse, zum Ausbilden einer Zugentlastung oder eine klemmende Befestigung kann wenigstens eine der Aufnahmehülsen zumindest abschnittsweise ein nach innen in die Aufnahmehülse hineinragendes Klemmelement aufweisen. Das Klemmelement kann z.B. aus dem Metallwerkstoff der Aufnahmehülse ausgeformt werden oder ein dort aufgeklebtes Klebeband, eine Art Dichtmasse oder ähnliches sein.

Besonders kostengünstig und technisch einfach kann der Leitungsverbinder bereitgestellt werden, wenn der Verbindungsabschnitt blechförmig ausgestaltet ist.

Um den Leitungsverbinder, insbesondere mitsamt den Leitungen, an einem Trägerteil, beispielsweise in einem Stromverteiler eines Kraftfahrzeugs, zu befestigen, kann der Verbindungsabschnitt ein Befestigungselement zum Verbinden mit einem Trägerteil aufweisen. Im einfachsten Fall kann das Befestigungselement eine Durchgangsöffnung sein, wobei der Leitungsverbinder dann nach Art eines Kabelschuhs z.B. an einem Kontaktbolzen angebracht werden kann. Über den Kontaktbolzen kann dann auch die elektrische Verbindung zu den elektrischen Leitungen bewerkstelligt werden.

Für eine noch einfachere Montage weist erfindungsgemäß der Leitungsverbinder zwei sich im Wesentlichen ergänzende Schalenelemente auf. Dies ermöglicht z.B., dass die jeweilige Leitung mit freigelegtem Leiter an bzw. auf ein Schalenelement gelegt und dann von der anderen Seite mit einem weiteren Schalenelement umschlossen werden kann. Dies ermöglicht auch, dass sich die Leitungslängsachse unter einem Winkel gegenüber der Längsachse der Aufnahmehülse von dem Leitungsverbinder weg erstrecken kann.

Erfindungsgemäß können sich die Schalenelemente über ein im Verbindungsabschnitt angeordnetes Koppelelement miteinander verbinden lassen. Dies kann z.B. durch Durchsetzfügen, Kleben oder ähnliches erfolgen. Alternativ dazu können die Schalenelemente auch durch ein Schweißverfahren stoffschlüssig miteinander verbunden werden, und zwar entweder gleichzeitig mit dem Verschweißen der jeweiligen Leitung mit der jeweiligen Aufnahmehülse bzw. in einem separaten Schweißvorgang.

Bei einem mehrteiligen Leitungsverbinder, kann zum Abdichten der Aufnahmehülsen auf zumindest einer Flachseite des Verbindungsabschnitts von einem der Schalenelemente ein Abdichtelement zum in Anlage bringen mit dem anderen Schalenelement angeordnet sein. Das Abdichtelement kann als Klebeband, als fluide Dichtmasse, als aufschmelzbares oder aufschäumendes Dichtmittel, Hotmelt usw. ausgeführt sein.

Um insbesondere beim Verteilen elektrischen Stroms zwischen den einzelnen Leitungen einen Schutz gegen Überströme zu gewährleisten, kann der Verbindungsabschnitt wenigstens eine Schmelzsicherung, beispielsweise in Form eines in einem Gehäuse angeordneten Schmelzleiters, aufweisen. In diesem Fall kann der Verbindungsabschnitt insgesamt aus dem Schmelzleiter und ggf. dem Gehäuse bestehen.

Nicht zur beanspruchten Erfindung gehört eine elektrische Leitungsanordnung, die vorzugsweise wenigstens einen Leitungsverbinder in einer oder mehreren der vorstehend beschriebenen Ausführungsvarianten aufweist. Die Leitungsanordnung verfügt über eine Mehrzahl von elektrischen Leitungen sowie einen Leitungsverbinder, der wenigstens eine zumindest an ihren Stirnseiten offene Aufnahmehülse aufweist, in denen die Leitungen zumindest abschnittsweise aufgenommen und damit stoffschlüssig verbunden sind.

Die Leitungsanordnung bietet den Vorteil, dass über den Leitungsverbinder und/oder über die darin miteinander verbundenen Leitungen eine Stromverteilung stattfinden kann, also ein Durchgangs- oder Endknoten gebildet werden kann. Dennoch muss kein Ultraschallschweißverfahren eingesetzt werden, da die einzelnen Leitungen in einer jeweils zugeordneten Aufnahmehülse angeordnet werden und durch die stirnseitige Öffnung insbesondere mittels Reibschweißen verschweißt werden können. Damit lässt sich die Schweißqualität verbessern, gleichzeitig ist der technische Aufwand zur Herstellung und Montage signifikant niedriger sowie eine optische Bewertung der Schweißstelle realisierbar.

Um eine Art Zugentlastung zu bewerkstelligen, kann ein Isolationsmantel der jeweiligen Leitung durch ein in das Innere der Aufnahmehülse hineinragendes Klemmelement radial geklemmt sein. Hierzu können an einer Innenwand der Aufnahmehülse z.B. Rillen oder sonstige Vorsprünge ausgeformt oder angebracht sein.

Alternativ dazu, kann an der Aufnahmehülse ein dazu separat gefertigter und/oder ausgeführter Isolationsmantelabschnitt angebracht sein, der wenigstens eine Durchgangsöffnung aufweisen kann. Vorzugsweise besteht dieser aus Metall, einem Polymerwerkstoff oder Keramik. In anderen Worten kann der Isolationsmantelabschnitt als Einsatz ausgeführt sein und aus einem zu der Aufnahmehülse unterschiedlichen Werkstoff gefertigt sein.

Die Erfindung bezieht sich ferner auch auf ein Verfahren nach Anspruch 9 zum Herstellen einer elektrischen Verbindung zwischen zwei oder mehr elektrischen Leitungen. Das Verfahren eignet sich insbesondere zur Herstellung der oben beschriebenen Leitungsanordnung und umfasst die folgenden Schritte:
- Es wird ein Leitungsverbinder mit wenigstens zwei Aufnahmehülsen bereitgestellt, die über wenigstens einen Verbindungsabschnitt miteinander elektrisch verbunden sind. Der Leitungsverbinder ermöglicht also eine Stromverteilung an mehrere Leitungen, wobei dieser Strom z.B. in einigen Ausführungsvarianten über den Verbindungsabschnitt eingespeist werden kann.
- Dann wird in eine zugeordnete Aufnahmehülse jeweils eine Leitung bzw. ein ggf. freigelegter Leiter abschnittsweise in diese Aufnahmehülse eingeführt.
- Die in der wenigstens einen Aufnahmehülse angeordneten Leitungen werden dann radial verpresst, indem die Aufnahmehülse von außen mit einer Presskraft beaufschlagt wird.
- Dann erfolgt ein stoffschlüssiges, idealerweise ultraschallfreies Verbinden der jeweiligen Leitung mit der Aufnahmehülse mittels eines Reibschweißwerkzeugs, das durch zumindest eine der Durchgangsöffnungen der wenigstens einen Aufnahmehülse an die Leitungen geführt und dann relativ dazu rotiert wird. Hierbei werden zumindest Teilbereiche der Innenwand der Aufnahmehülse mit den freigelegten, verpressten Leitungen stoffschlüssig verbunden.
- Optional kann dann eine optische Prüfung der Schweißverbindung zwischen Aufnahmehülse und der Leitung durchgeführt werden, wozu die Aufnahmehülse idealerweise die oben erwähnte stirnseitige Durchgangsöffnung aufweisen kann.

Das Verfahren bietet damit den Vorteil, dass der technische Aufwand zum Verbinden mehrerer Leitungen signifikant reduziert werden kann. Insbesondere wenn das Verschweißen ohne den Einsatz von Ultraschall erfolgt, lässt sich eine gute Überwachung der Schweißqualität z.B. durch die stirnseitige Öffnung bewerkstelligen. Eine Beschädigung angrenzender Bauteile durch den Ultraschall ist damit auch ausgeschlossen.

Erfindungsgemäß ist vorgesehen, dass das stoffschlüssige Verbinden durch ein Reibschweißwerkzeug erfolgt, das durch eine Durchgangsöffnung der jeweiligen Aufnahmehülse an die Leitung heran geführt, ggf. damit in Kontakt gebracht und dann relativ dazu rotiert wird. Das Reibschweißwerkzeug kann beispielsweise ein dornartiges Werkzeug sein, wie es für das Rührreibschweißen bekannt ist. Durch die gleiche Durchgangsöffnung kann dann die optionale optische Prüfung der Schweißverbindung erfolgen.

Damit insbesondere der freigelegte Leiter der jeweiligen Leitung gut an einer Innenfläche der Aufnahmehülse anliegt, eine Vorfixierung der Leitung in der Aufnahmehülse erfolgt oder das stoffschlüssige Verbinden erleichtert wird, wird die Aufnahmehülse vor dem stoffschlüssigen Verbinden mit der darin aufgenommenen Leitung vorzugsweise aus radialer Richtung über vorzugsweise den gesamten Umfang der Aufnahmehülse verpresst. Dabei übt erfindungsgemäß das verwendete Presswerkzeug auch noch während des Reibschweißens eine Presskraft auf die Aufnahmehülse aus, um so ein Mitdrehen beim Rotieren des Reibschweißwerkzeugs zu verhindern.

### Kurze Figurenbeschreibung

Nachfolgend werden vorteilhafte Ausführungsbeispiele der Erfindung unter Bezugnahme auf die begleitenden Figuren erläutert. Es zeigen:
- Figur 1: ein erstes nicht zur beanspruchten Erfindung gehörendes Beispiel einer Leitungsanordnung mit einem nicht zur beanspruchten Erfindung gehörenden Leitungsverbinder in einer perspektivischen Ansicht,
- Figur 2: ein weiteres nicht zur beanspruchten Erfindung gehörendes Beispiel einer Leitungsanordnung mit einem nicht zur beanspruchten Erfindung gehörenden Leitungsverbinder in einer perspektivischen Ansicht,
- Figur 3: ein weiteres nicht zur beanspruchten Erfindung gehörendes Beispiel einer Leitungsanordnung mit einem nicht zur beanspruchten Erfindung gehörenden Leitungsverbinder in einer perspektivischen Ansicht,
- Figur 4: ein weiteres nicht zur beanspruchten Erfindung gehörendes Beispiel einer Leitungsanordnung mit einem nicht zur beanspruchten Erfindung gehörenden Leitungsverbinder in einer perspektivischen Ansicht,
- Figur 5: ein weiteres nicht zur beanspruchten Erfindung gehörendes Beispiel einer Leitungsanordnung mit einem nicht zur beanspruchten Erfindung gehörenden Leitungsverbinder in einer perspektivischen Ansicht,
- Figur 6: eine weitere nicht zur beanspruchten Erfindung gehörende Variante einer Leitungsanordnung sowie eines nicht zur beanspruchten Erfindung gehörenden Leitungsverbinders in einer Seitenansicht,
- Figur 7: eine mit einem Sicherungselement ausgestattete, nicht zur beanspruchten Erfindung gehörende Leitungsanordnung mit einem Leitungsverbinder in einer Seitenansicht,
- Figur 8: ein exemplarisches Schalenelement eines erfindungsgemäßen Leitungsverbinders in einer perspektivischen Ansicht,
- Figur 9: zwei Schalenelemente eines erfindungsgemäßen Leitungsverbinders, während eines Teilschritts der Herstellung einer erfindungsgemäßen Leitungsanordnung in einer geschnittenen Draufsicht,
- Figur 10: Teilschritte der Herstellung einer Leitungsanordnung in einer Schnittansicht,
- Figur 11: eine Leitungsanordnung mit einer mit einem Leitungsverbinder verschweißten Leitung in einer Schnittansicht und
- Figur 12: einen Teilabschnitt einer Leitungsanordnung mit zwei Schalenelementen eines Leitungsverbinders.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

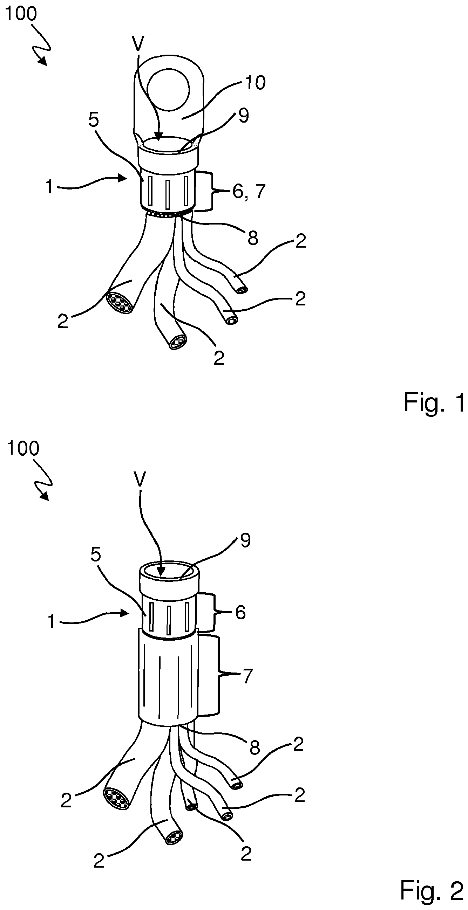

Figur 1 zeigt in einer perspektivischen Seitenansicht ein erstes Ausführungsbeispiel einer elektrischen Leitungsanordnung 100, die einen Leitungsverbinder 1 gemäß eines ersten Ausführungsbeispiels sowie eine Mehrzahl von, hier exemplarisch vier, hieran angebrachten elektrischen Leitungen 2 in Form von z.B. Litzenleitern aufweist. Die Leitungsanordnung 100 eignet sich besonders gut für Durchgangs- bzw. Endverbinder, wie sie z.B. in Kraftfahrzeugen eingesetzt werden. Funktional betrachtet, sind die von einem Isolationsmantel 3 umgebenen elektrischen Leiter 4 der Leitungen 2 einerseits mit dem gemeinsamen Leitungsverbinder 1 und andererseits mit einer jeweiligen (nicht dargestellten) elektrischen Last elektrisch verbunden.

Der in Figur 1 gezeigte Leitungsverbinder 1 ist hülsenförmig ausgestaltet und bildet im Inneren eine, hier hohlzylindrische, Aufnahmehülse 5, in der die einzelnen Leitungen 2 gemeinsam angeordnet und damit zusammengefasst sind. In anderen Worten bilden die Leitungen 2 innerhalb der Aufnahmehülse 5 einen gemeinsamen Verbindungsknoten. Die Aufnahmehülse 5 lässt sich entlang ihrer Hülsenlängsachse konstruktiv, aber auch funktional, in einen Verpressabschnitt 6 sowie einen Isolationsmantelabschnitt 7 unterteilen. Im Verpressabschnitt 6 ist die Aufnahmehülse 5 radial verpresst, wodurch auch die Leitungen 2, die im Verpressabschnitt 6 vorzugsweise durch Entfernen des Isolationsmantels 3 abisoliert sind, mit der Aufnahmehülse 5 verpresst sind. Zudem sind die Leitungen 2 hauptsächlich im Verpressabschnitt 6 mit einer Innenfläche der Aufnahmehülse 5 und/oder untereinander verschweißt. Im Isolationsmantelabschnitt 7 erfolgt jedoch kein Verschweißen, da der Wärmeeintrag des eingesetzten, weiter unten noch detaillierter beschriebenen Reibschweißverfahrens idealerweise nicht bis dorthin erfolgt.

Die Aufnahmehülse 5 hat an einer ersten Stirnseite eine erste Durchgangsöffnung 8 und an einer gegenüberliegenden, zweiten Stirnseite eine zweite Durchgangsöffnung 9, wobei die Leitungen 2 in diesem Ausführungsbeispiel von der ersten Durchgangsöffnung 8 her so durch die Aufnahmehülse 5 geführt sind, dass die darin aufgenommenen Leitungsenden im Wesentlichen zueinander bündig sowie benachbart zur zweiten Durchgangsöffnung 9 angeordnet sind. Im hier gezeigten, bereits verschweißten Zustand ist die resultierende Schweißverbindung V durch die zweite Durchgangsöffnung 9 zu sehen und lässt sich daher mit optischen Mitteln, wie etwa einem Kamerasystem, hinsichtlich der Schweißqualität optisch überprüfen. Zudem weisen der Leitungsverbinder 1 bzw. die Aufnahmehülse 5 in diesem Ausführungsbeispiel benachbart zur zweiten Durchgangsöffnung 9 ein einstückig ausgeformtes, elektrisches Kontaktelement 10 auf, das über die entsprechende Stirnseite außen vorsteht und, wie ein Kabelschuh, zur elektrischen Verbindung an einem (nicht gezeigten) Trägerelement, wie etwa einem Karosserieteil eines Kraftfahrzeugs, befestigt werden kann. Über das Kontaktelement 10 wird der Leitungsverbinder 1 auch mechanisch (kraft-und/oder formschlüssig) an dem Trägerelement gehalten.

Figur 2 zeigt ein weiteres Ausführungsbeispiel der elektrischen Leitungsanordnung 100, das sich hauptsächlich dadurch von dem vorstehend beschriebenen unterscheidet, dass der Isolationsmantelabschnitt 7 länger ausgebildet ist sowie einen gegenüber dem Verpressabschnitt 6 größeren Innendurchmesser aufweist. Zudem ist hier nicht explizit das Kontaktelement 10 vorgesehen, weil dies nicht in jedem Anwendungsfall benötigt wird. Jedoch ist auch hier die Schweißverbindung V durch die zweite Durchgangsöffnung 9 optisch überprüfbar.

Der Isolationsmantelabschnitt 7 dient in diesem Ausführungsbeispiel zusätzlich als Zugentlastungselement der einzelnen isolierten Leiter 2 in der Leitungsanordnung 100. Diese können mit Isolation 3 in der Aufnahmehülse 5 im Isolationsmantelabschnitt 7 ebenfalls verpresst sein. Dieser Bereich 7 kann auch rückseitig zur mediendichten Abdichtung der abisolierten Leiter 4 und des Schweißverbindungsbereichs V zur Richtung der Leitungen 2 genutzt werden. Weiterhin kann der Isolationsmantelabschnitt 7 als separates Bauteil aus Metall, Polymerwerkstoff oder Keramik ausgeführt sein

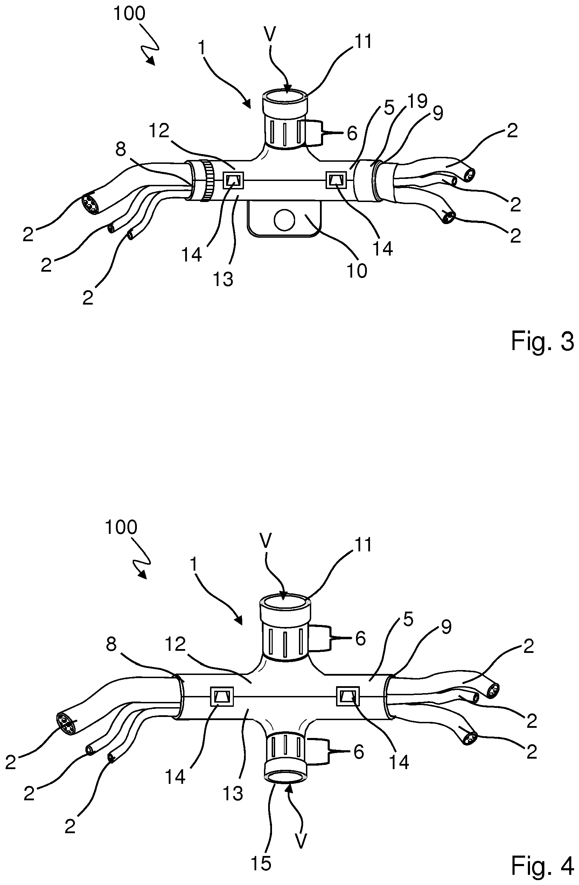

In Figur 3 ist ein weiteres Ausführungsbeispiel der Leitungsanordnung 100 gezeigt, bei dem der Leitungsverbinder 1 zusätzlich eine dritte Durchgangsöffnung 11 aufweist, deren Lochachse quer zur (hier gemeinsamen) Lochachse der ersten und zweiten Durchgangsöffnung 8, 9 angeordnet ist. In diesem Ausführungsbeispiel sind die Lochachsen zueinander senkrecht angeordnet, wobei die dritte Durchgangsöffnung 11 zwischen der ersten und zweiten Durchgangsöffnung 8, 9 angeordnet ist. Funktional betrachtet unterscheiden sich die erste und zweite Durchgangsöffnung 8, 9 von den vorstehend beschriebenen Ausführungsbeispielen, da hier die Schweißverbindung V nicht durch die zweite Durchgangsöffnung 9, sondern quer dazu durch die dritte Durchgangsöffnung 11 gebildet wird. Dennoch bleibt die Schweißverbindung V durch die dritte Durchgangsöffnung 11 optisch überprüfbar.

Aus Figur 3 geht auch hervor, dass das Kontaktelement 10 in diesem Ausführungsbeispiel, wiederum ähnlich zu einem Kabelschuh, gegenüber der dritten Durchgangsöffnung 11 angeordnet ist und sich von diesem in eine entgegen gesetzte Richtung weg erstreckt. Zudem ist der Leitungsverbinder in diesem Ausführungsbeispiel mehrteilig ausgebildet und weist entsprechend zwei sich ergänzende Schalenelemente 12, 13 auf, die über wenigstens ein (hier exemplarisch insgesamt zwei) Koppelelement 14 aneinander befestigt sind. Das Koppelelement 14 ist hier exemplarisch als Verclipsung ausgestaltet, so dass die Schalenelemente 12, 13 um die zu verbindenden Leitungen 2 herum angeordnet und dann einfach zusammengedrückt und damit verbunden werden. Die Verbindung der Schalenelemente 12, 13 kann auch durch ein Wickelband, Klebeband, Schrumpfschlauch oder Kabelbinder erfolgen.

Die Schalenelemente 12, 13 können als an die Aufnahmehülse 5 separat angebrachte Bauteile aus Metall, Polymerwerkstoff oder Keramik ausgeführt sein.

Figur 4 zeigt ein weiteres Ausführungsbeispiel der Leitungsanordnung 100, in dem zusätzlich eine vierte Durchgangsöffnung 15 ausgebildet ist, die hier der dritten Durchgangsöffnung 11 gegenüberliegt. Dies ist insbesondere dann vorteilhaft, wenn das Bündel der Leitungen 2 einen so großen Gesamtdurchmesser aufweist, dass es in zwei Bündel aufgeteilt wird, um durch eine Plastifizierung der Fügepartner von zwei gegenüberliegenden radialen Seiten eine höhere Schweißqualität der durch die sowohl dritte als auch vierte Durchgangsöffnung 11, 15 gebildeten Schweißverbindung V bewirkt. Zur Befestigung des Leitungsverbinders 1 an einem Trägerteil kann eine hier verdeckte, seitliche Befestigungslasche, wie das Kontaktelement 10, oder ähnliches vorgesehen sein.

Die Schweißverbindung V der beiden Durchgangsöffnungen 11, 15 sind hier so ausgeführt, dass im Verpressabschnitt 6 der Durchgangsöffnung 11 nur Leitungen 2 mit einem elektrischen Leiter 4 aus Aluminium und in Durchgangsöffnung 15 nur Leitungen 2 mit elektrischen Leitern aus Kupfer verschweißt sind.

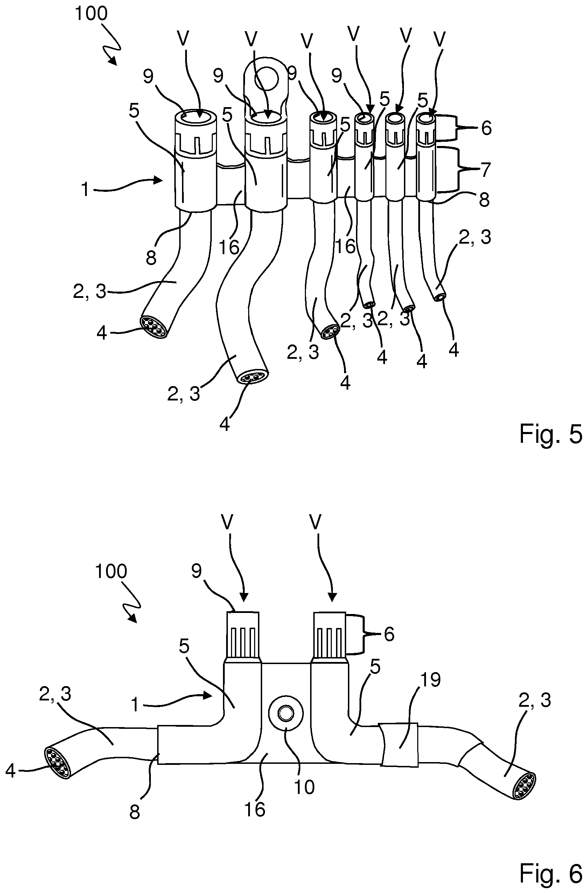

Der Leitungsverbinder 1 des in Figur 5 gezeigten Ausführungsbeispiels ist als Stanz-/Biegeteil, hier zudem exemplarisch einstückig, ausgeführt und verfügt über eine der Anzahl von Leitungen 2 entsprechende Anzahl von einzelnen Aufnahmehülsen 5, deren jeweiliger Innendurchmesser geringfügig größer ist als der Außendurchmesser des darin aufzunehmenden Leiters 4 bzw. des Isolationsmantels 3. Die Aufnahmehülsen 5 haben hier unterschiedliche Innendurchmesser für unterschiedliche Leitungsdurchmesser, wobei dies lediglich optional bzw. exemplarisch ist. Bei den Aufnahmehülsen 5 ist zumindest teilweise der Verpressabschnitt 6 gegenüber dem Isolationsmantelabschnitt 7 verjüngt. Im Verpressabschnitt 6 (in Figur 5 oben) sind, wie bei dem oben beschriebenen Ausführungsbeispielen, wiederum die freigelegten Leiter 4 mit den Aufnahmehülsen 5 bzw. deren Innenfläche verschweißt, wobei hier zusätzlich eine Verpressung vorgesehen sein kann.

Die jeweiligen Aufnahmehülsen 5 sind durch eine entsprechende Anzahl von Verbindungsabschnitten 16 miteinander elektrisch verbunden, wobei die Verbindungsabschnitte 16 insbesondere in diesem Ausführungsbeispiel blechförmig sowie einstückig mit den Aufnahmehülsen 5 ausgeführt sind. Das hierfür gewählte Blechmaterial ist elektrisch leitfähig, so dass die Aufnahmehülsen 5 über die Verbindungsabschnitte 16 elektrisch verbunden sind.

Wie aus Figur 5 erkennbar, ist jeweils ein freies Leitungsende der Leitungen 2, bei dem der Leiter 4 abschnittsweise freigelegt ist, in die jeweilige Aufnahmehülse 5 eingesteckt, wofür die jeweilige Aufnahmehülse 5 wiederum die (in Figur 5 untere) erste Durchgangsöffnung 8 aufweist. Auf der gegenüberliegenden Seite weist die jeweilige Aufnahmehülse 5 aber auch die (in Figur 5 obere) zweite Durchgangsöffnung 9 auf, die zum Einführen des Schweißwerkzeugs dient, wie das weiter unten noch detaillierter erläutert wird.

Benachbart zu oder an der zweiten Durchgangsöffnung 9 ist hier exemplarisch an einer der Aufnahmehülsen 5 das elektrische Kontaktelement 10 in Form eines Kabelschuhs angeordnet, das entweder einstückig mit der Aufnahmehülse 5 ausgebildet oder bei dem, weiter unten noch erläuterten Schweißvorgangs, mit angeschweißt wird.

In Figur 6 ist eine Ausführungsvariante des Leitungsverbinders 1 dargestellt, bei dem die Leitungen 2 abgewinkelt von den Aufnahmehülsen 5 weg geführt werden. Hierzu sind die Aufnahmehülsen 5 selbst abgewinkelt ausgeführt, so dass die Lochachsen der ersten und zweiten Durchgangsöffnungen 8, 9 nicht auf einer gemeinsamen Hülsenlängsachse liegen, sondern auf zueinander abgewinkelten, z.B. rechtwinkligen. Hier sind exemplarisch zwei Aufnahmehülsen 5 gezeigt, jedoch können auch bei dieser Ausführungsvariante mehr als zwei Aufnahmehülsen 5 vorgesehen sein. Aus Figur 6 geht aber auch hervor, dass in dem Verbindungsabschnitt 16 eine Ausführungsvariante des Kontakt- bzw. Befestigungselements 10 zum elektrischen Verbinden mit einem (nicht gezeigten und nicht näher bezeichneten) elektrischen Gegenelement bzw. Trägerelement angeordnet ist. Das Befestigungselement 10 weist, wiederum ähnlich einem Kabelschuh, ein Durchgangsloch sowie einen hindurch gesteckten Schraubenbolzen auf. Bei dem Befestigungselement 10 kann es sich auch um einen aufgeschweißten oder eingepressten Gewindebolzen oder Mutter handeln.

Gegen Medieneinfluss kann der Übergangsbereich zwischen der Durchgangsöffnung 8 des gekrümmten Hülsenelements 5 und dem elektrischen Leiter 2 durch einen Schrumpfschlauch 19 abgedichtet werden.

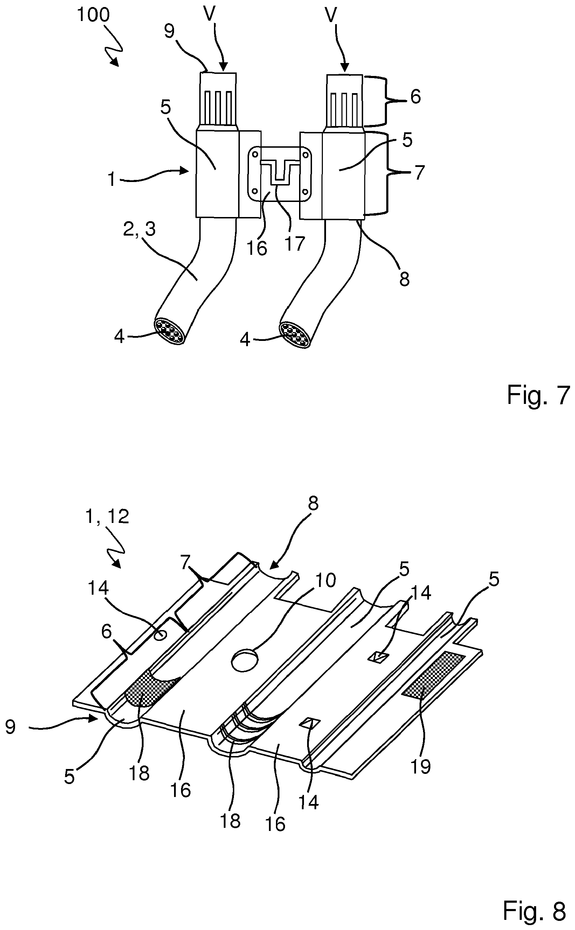

In der in Figur 7 gezeigten Ausführungsvariante weist der Verbindungsabschnitt 16 zwischen zwei Aufnahmehülsen 5 in einer Aussparung ein Sicherungselement 17 in Form einer Schmelzsicherung mit einem die Aufnahmehülsen 5 elektrisch verbindenden Schmelzleiter auf. Das Sicherungselement 17 überlappt sich mit seitlichen Laschen der Aufnahmehülsen 5 und ist z.B. mittels Durchsetzfügen daran befestigt.

In Figur 8 ist eine weitere, mehrteilige Ausführungsvariante des Leitungsverbinders 1 gezeigt. Denn dieser muss nicht zwingend einstückig ausgeführt sein, sondern kann dieser Ausführungsvariante entsprechend auch die zwei sich ergänzenden Schalenelemente 12, 13 aufweisen. Figur 8 zeigt demnach ein einzelnes Schalenelement 12, das jeweils einen Teil bzw. eine Hälfte der jeweiligen Aufnahmehülsen 5 ausbildet. Ergänzt um ein weiteres Schalenelement 13 ergibt sich dann die z.B. hohlzylindrische Aufnahmehülse 5. Benachbart zu der zweiten Durchgangsöffnung 9 der Aufnahmehülse 5 verfügt das Schalenelement 12 innerhalb des Teils der Aufnahmehülsen 5 z.B. über Klemm- und/oder Befestigungselemente 18 zum in Anlage bringen mit dem Leiter 4, bei dem es sich vorzugsweise um einen Litzenleiter handelt. Das Klemm- und/oder Befestigungselement 18 ist z.B. eine aus dem Blechmaterial des Schalenelements 12 ausgeformte, hervorstehende Rille, ein Klebeband oder ähnliches. Des Weiteren ist in Figur 8 auch noch einmal das Befestigungselement 10 zu erkennen, das hier als einfache Durchgangsöffnung ausgestaltet ist. Darüber hinaus ist in Figur 8 angedeutet, wie die beiden Schalenelemente 12, 13 miteinander verbunden werden können. Hierzu sind in dem Verbindungsabschnitt 16 Koppelelemente 14 vorgesehen, die die Schalenelemente 12, 13 mechanisch miteinander verbinden. Das erfolgt z.B. mittels Kleben, Durchsetzfügen, Verklemmen usw. Um das Eindringen von Fremdkörpern und/oder Feuchtigkeit zu verhindern, ist zumindest in seitlichen Laschen des Leitungsverbinders 1 ein Abdichtelement 19 auf einer Flachseite vorgesehen, dass dann zwischen den beiden Schalenelementen 12, 13 eingeklemmt ist, abdichtet und diese ggf. miteinander verklebt.

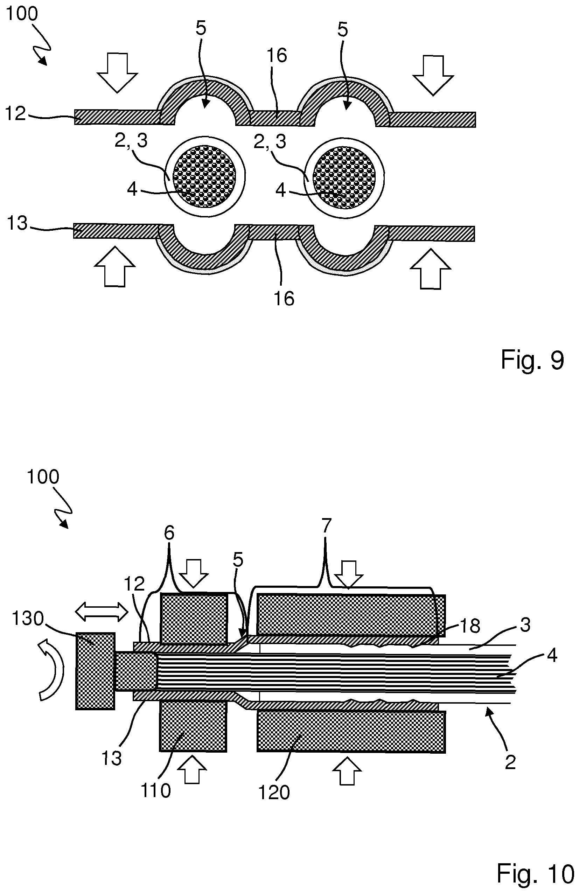

Anhand der Figuren 9 bis 12 wird nachfolgend ein exemplarisch ausgestaltetes Verfahren zum Herstellen einer elektrischen Verbindung zwischen den Leitungen 2 bzw. zum Herstellen der Leitungsanordnung 100 unter Zuhilfenahme des Leitungsverbinders 1 erläutert.

Zunächst werden die Leiter 4 der Leitungen 2, von denen hier exemplarisch zwei gezeigt sind, durch Entfernen des Isolationsmantels 3 abschnittsweise freigelegt. Die Leiter 4 sind hier wiederum als Litzenleiter ausgeführt.

Bei einem einstückig ausgeführten Leitungsverbinder 1 (siehe z.B. Figur 1, 2 und 5) werden dann die Leitungen 2 von der ersten Durchgangsöffnung 8 her in die jeweilige Aufnahmehülse 5 eingesteckt und bis knapp unter die zweite Durchgangsöffnung 9 geführt.

Bei dem in z.B. Figuren 3, 4, 6, 8 und 9 gezeigten mehrteiligen Leitungsverbinder 1 werden dagegen die Schalenelemente 12, 13 um die Leitungsenden angeordnet und dann, wie in Figur 9 mit Pfeilen angedeutet, zusammengefügt. Dabei ergänzen sich die Schalenelemente 12, 13 gegenseitig derart, dass die Enden der freigelegten Leiter 4, analog zu der einstückigen Ausführungsvariante, benachbart zu der zweiten Durchgangsöffnung 9 angeordnet sind.

Wie in Figur 10 gezeigt, werden dann sowohl bei der einstückigen als auch bei der mehrteiligen Variante des Leitungsverbinders 1 die Aufnahmehülsen 5 durch ein Presswerkzeug mit Pressbacken 110, 120 radial verpresst, wie dies in Figur 10 durch Pfeile angedeutet ist. Im (hier besser zu erkennenden) Verpressabschnitt 6 wird dabei der freigelegte Leiter 4 in direkte Anlage mit der Innenfläche der jeweiligen Aufnahmehülse 5 gebracht. Im Isolationsmantelabschnitt 7 werden ein oder mehrere Klemmelemente 18 in Form von in die Aufnahmehülse 5 hineinragenden Vorsprüngen in kraft- und/oder formschlüssigen Eingriff mit dem Isolationsmantel 3 gebracht.

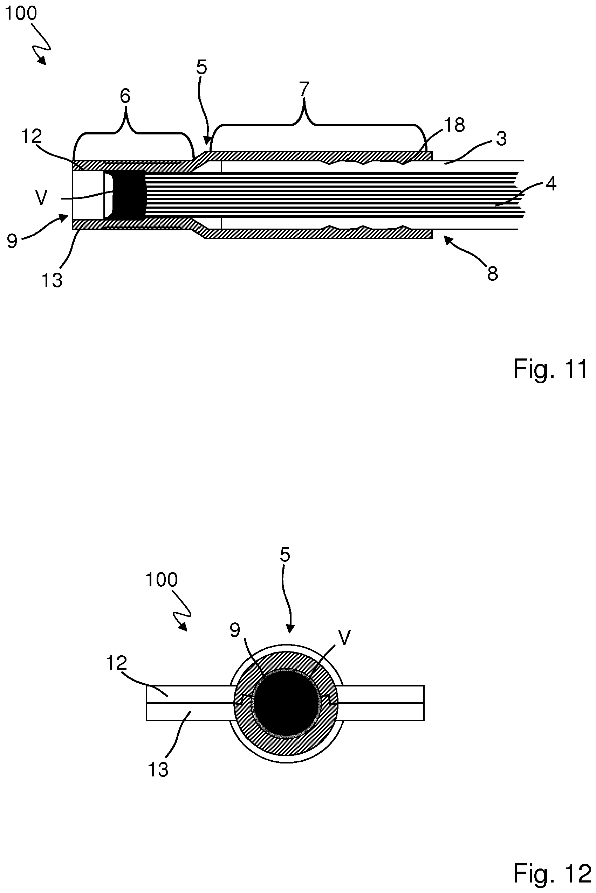

Nach dem Verpressen halten die Pressbacken 110, 120 die jeweiligen Abschnitte des Leitungsverbinders 1 jedoch weiterhin verdrehsicher. Dann wird ein Reibschweißwerkzeug 130 an die zweite Durchgangsöffnung 9 herangeführt, wie dies in Figur 10 wiederum durch einen Pfeil angedeutet ist. Das abschnittsweise in die jeweilige Aufnahmehülse 5 eingeführte Reibschweißwerkzeug 130 wird dann relativ zu dem verdrehsicher gehaltenen Leitungsverbinder 1 sowie der Leitung 2 rotiert, wie auch dies in Figur 10 durch einen entsprechenden Pfeil angedeutet ist. Durch das Reibschweißen werden das Leitermaterial und/oder zumindest abschnittsweise das Material der Aufnahmehülse 5 plastifiziert, so dass sich die stoffschlüssige Verbindung V (siehe Figuren 11 und 12) zwischen der jeweiligen Aufnahmehülse 5 und dem jeweiligen Leiter 4 ausbildet.

Figur 11 zeigt die so hergestellte Leitungsanordnung 100 in einer Schnittansicht. Nach dem stoffschlüssigen Verbinden wird die resultierende Schweißverbindung V durch die (in Figur 11 linke) zweite Durchgangsöffnung 9 optisch, z.B. unter Zuhilfenahme eines Kamerasystems, geprüft.

Schließlich zeigt Figur 12 die hergestellte Leitungsanordnung 100 in einer Draufsicht, wobei durch die zweite Durchgangsöffnung 9 die stoffschlüssige Verbindung V direkt erkennbar ist. Daraus geht auch hervor, dass durch den Schweißvorgang mit dem Reibschweißwerkzeug 130 zudem das erste und zweite Schalenelement 12, 13 zu einem Element verbunden wurden.

Weiterhin ist hier dargestellt, dass die Aufnahmehülsen 5 der Schalenelemente 12, 13 so ausgeführt sind, dass sie geometrisch bzw. formschlüssig zueinander angepasst sind und dadurch bei der Verschweißung der Leiter 4 mit der Aufnahmehülse 5 im Verpressabschnitt 6 ein Verdrücken durch auftretende Schweißkräfte teilweise unterbunden werden kann.

### BEZUGSZEICHENLISTE

- 100: Elektrische Leitungsanordnung
- 110: Presswerkzeug bzw. Pressbacken
- 120: Presswerkzeug bzw. Pressbacken
- 130: Schweißwerkzeug (z.B. Reibschweißwerkzeug)

- 1: Elektrischer Leitungsverbinder
- 2: Elektrische Leitung
- 3: Isolationsmantel
- 4: Elektrischer Leiter
- 5: Aufnahmehülse
- 6: Verpressabschnitt
- 7: Isolationsmantelabschnitt
- 8: Erste Durchgangsöffnung
- 9: Zweite Durchgangsöffnung
- 10: Elektrischer Kontakt bzw. mechanisches Befestigungselement
- 11: Dritte Durchgangsöffnung
- 12: Erstes Schalenelement
- 13: Zweites Schalenelement
- 14: Koppelelement
- 15: Vierte Durchgangsöffnung
- 16: Verbindungsabschnitt
- 17: Sicherungselement (z.B. Schmelz
- 18: Klemm- und/oder Befestigungselement
- 19: Abdichtelement

- V: Stoffschlüssige Verbindung

## Patentansprüche

1. Leitungsverbinder (1) zum unlösbaren miteinander Verbinden von zwei oder mehr elektrischen Leitungen (2), mit wenigstens einer zum abschnittsweisen Aufnehmen der Leitungen (2) ausgebildeten,
metallischen Aufnahmehülse (5), die wenigstens eine erste Durchgangsöffnung (8) sowie eine zweite Durchgangsöffnung (9) zum Einführen eines Reibschweißwerkzeugs (130) und wenigstens einen zwischen den Durchgangsöffnungen (8, 9) angeordneten Verpressabschnitt (6) aufweist, in dem die Aufnahmehülse (5) radial verpressbar ist und der zur verdrehsicheren Halterung des Leitungsverbinders (1) während des Reibschweißvorgangs mittels des Reibschweißwerkzeugs (130) dienen kann,
wobei ferner der Leitungsverbinder (1) zwei oder mehr Aufnahmehülsen (5) aufweist, die über wenigstens einen elektrisch leitfähigen Verbindungsabschnitt (16) miteinander verbunden sind, **dadurch gekennzeichnet, dass** der Leitungsverbinder (1) zwei sich im Wesentlichen ergänzende Schalenelemente (12, 13) aufweist und dass die Schalenelemente (12, 13) über ein im Verbindungsabschnitt (16) angeordnetes Koppelelement (14) miteinander verbindbar sind, wobei das einzelne Schalenelement (12,13) jeweils einen Teil der Aufnahmehülsen (5) bildet.

2. Leitungsverbinder (1) nach Anspruch 1, **dadurch gekennzeichnet, dass** wenigstens eine Aufnahmehülse (5) wenigstens eine dritte Durchgangsöffnung (11) aufweist, deren Lochachse quer zur Lochachse der ersten und/oder zweiten Durchgangsöffnung (8, 9) ausgerichtet ist.

3. Leitungsverbinder (1) nach Anspruch 2, **dadurch gekennzeichnet, dass** die wenigstens eine Aufnahmehülse (5) eine vierte Durchgangsöffnung (15) aufweist, deren Lochachse quer zur Lochachse der ersten und/oder zweiten Durchgangsöffnung (8, 9) ausgerichtet ist.

4. Leitungsverbinder (1) nach Anspruch 1, **dadurch gekennzeichnet, dass** sich der Innendurchmesser einer ersten Aufnahmehülse (5) vom Innendurchmesser einer zweiten Aufnahmehülse (5) unterscheidet.

5. Leitungsverbinder (1) nach einem der vorhergehenden Ansprüche, **dadurch gekennzeichnet, dass** sich wenigstens eine Aufnahmehülse (5) von der ersten Durchgangsöffnung (8) hin zur zweiten Durchgangsöffnung (9) verjüngt.

6. Leitungsverbinder (1) nach einem der vorhergehenden Ansprüche, **dadurch gekennzeichnet, dass** wenigstens eine Aufnahmehülse (5) zumindest abschnittsweise ein nach innen in die Aufnahmehülse (5) hineinragendes Klemmelement (18) aufweist.

7. Leitungsverbinder (1) nach Anspruch 1, **dadurch gekennzeichnet, dass** der Verbindungsabschnitt (16) blechförmig ausgestaltet ist.

8. Leitungsverbinder (1) nach Anspruch 1, **dadurch gekennzeichnet, dass** der Verbindungsabschnitt (16) ein Kontakt- oder Befestigungselement (10) zum elektrischen Kontaktieren oder mechanischen Verbinden mit einem Trägerteil aufweist.

9. Verfahren zum Herstellen einer elektrischen Verbindung zwischen zwei oder mehr elektrischen Leitungen (2), mit den Schritten:
- Bereitstellen eines Leitungsverbinders (1) mit wenigstens zwei jeweils zwei Durchgangsöffnungen (8, 9, 11, 15) aufweisenden metallischen Aufnahmehülsen (5), die über wenigstens einen elektrisch leitfähigen Verbindungsabschnitt (16) miteinander verbunden sind, wobei
der Leitungsverbinder (1) zwei sich im Wesentlichen ergänzende Schalenelemente (12, 13) aufweist und die Schalenelemente (12, 13) über ein im Verbindungsabschnitt (16) angeordnetes Koppelelement (14) miteinander verbindbar sind, wobei das einzelne Schalenelement (12,13) jeweils einen Teil der Aufnahmehülsen (5) bildet,
- abschnittsweises Einführen der Leitungen (2) wenigstens eine Aufnahmehülse (5),
- radiales Verpressen der wenigstens einen Aufnahmehülse (5) durch ein Presswerkzeug (110, 120) in einem zwischen den Durchgangsöffnungen (8, 9,11,15) angeordneten Verpressabschnitt (6), und
- stoffschlüssiges Verbinden der jeweiligen Leitung (2) mit der Aufnahmehülse (5) mittels eines Reibschweißwerkzeugs (130), das durch zumindest eine der Durchgangsöffnungen (9, 11, 15) der wenigstens einen Aufnahmehülse (5) an die Leitungen (2) geführt und dann relativ dazu rotiert wird, wobei der Verpressabschnitt (6) zur verdrehsicheren Halterung des Leitungsverbinders (1) während des Reibschweißvorgangs mittels des Reibschweißwerkzeugs (130) indem nach dem Verpressen der Verpressabschnitt (6) von Pressbacken des Presswerkzeugs (110, 120) weiterhin verdrehsicher gehalten wird.

10. Verfahren nach Anspruch 9, **dadurch gekennzeichnet, dass** die Leitungen (2) so durch die Aufnahmehülse (5) geführt werden, dass die darin aufgenommenen Leitungsenden im Wesentlichen zueinander bündig angeordnet werden.

11. Verfahren nach einem der Ansprüche 9 oder 10, **dadurch gekennzeichnet, dass**, in dem Leitungsverbinder (1) Leitungen (2) unterschiedlicher Werkstoffe aufgenommen werden.

12. Verfahren nach einem der Ansprüche 9 bis 11, **dadurch gekennzeichnet, dass** bei dem Verpressen in dem Verpressabschnitt (6) ein freigelegter Leiter (4) in direkte Anlage mit der Innenfläche der jeweiligen Aufnahmehülse (5) gebracht wird und in einem Isolationsmantelabschnitt (7) ein oder mehrere Klemmelemente (18) in Form von in die Aufnahmehülse (5) hineinragenden Vorsprüngen in kraft- und/oder formschlüssigen Eingriff mit einem Isolationsmantel (3) gebracht werden.

## Claims

1. Line connector (1) for connecting two or more electric lines (2) non-detachably to one another, having at least one metallic receiving sleeve (5) designed to partially receive the lines (2), which has at least one first passage opening (8) and a second passage opening (9) for the insertion of a friction welding tool (130) and at least one pressing section (6) which is arranged between the passage openings (8, 9) and in which the receiving sleeve (5) can be pressed radially and which can be used to hold the line connector (1) so as to be secure against rotation during the friction welding procedure by means of the friction welding tool (130), wherein, in addition, the line connector (1) has two or more receiving sleeves (5), which are connected to one another via at least one electrically conductive connecting section (16), **characterized in that** the line connector (1) has two substantially complementary shell elements (12, 13), and **in that** the shell elements (12, 13) can be connected to each other via a coupling element (14) arranged in the connecting section (16), wherein the individual shell element (12, 13) in each case forms a part of the receiving sleeves (5).

2. Line connector (1) according to Claim 1, **characterized in that** at least one receiving sleeve (5) has at least one third passage opening (11), the hole axis of which is aligned transversely relative to the hole axis of the first and/or second passage opening (8, 9) .

3. Line connector (1) according to Claim 2, **characterized in that** the at least one receiving sleeve (5) has a fourth passage opening (15), the hole axis of which is aligned transversely relative to the hole axis of the first and/or second passage opening (8, 9).

4. Line connector (1) according to Claim 1, **characterized in that** the internal diameter of a first receiving sleeve (5) differs from the internal diameter of a second receiving sleeve (5).

5. Line connector (1) according to one of the preceding claims, **characterized in that** at least one receiving sleeve (5) tapers from the first passage opening (8) towards the second passage opening (9).

6. Line connector (1) according to one of the preceding claims, **characterized in that** at least one receiving sleeve (5) at least partly has a clamping element (18) that projects inwards into the receiving sleeve (5).

7. Line connector (1) according to Claim 1, **characterized in that** the connecting section (16) is configured in the form of a metal sheet.

8. Line connector (1) according to Claim 1, **characterized in that** the connecting section (16) has a contact or fixing element (10) for electrically contacting or mechanically connecting to a carrier part.

9. Method for producing an electric connection between two or more electric lines (2) comprising the steps:
- providing a line connector (1) having at least two metallic receiving sleeves (5) each having two passage openings (8, 9, 11, 15), which are connected to one another via at least one electrically conductive connecting section (16), wherein
the line connector (1) has two substantially complementary shell elements (12, 13), and the shell elements (12, 13) can be connected to each other via a coupling element (14) arranged in the connecting section (16), wherein the individual shell element (12, 13) in each case forms a part of the receiving sleeves (5),
- inserting the lines (2) partly into at least one receiving sleeve (5),
- radially pressing the at least one receiving sleeve (5) by means of a pressing tool (110, 120) in a pressing section (6) arranged between the passage openings (8, 9, 11, 15),
- integrally connecting the respective line (2) to the receiving sleeve (5) by means of a friction welding tool (130), which is guided through at least one of the passage openings (9, 11, 15) of the at least one receiving sleeve (5) onto the lines (2) and is then rotated relative thereto, wherein the pressing section (6) is used for holding the line connector (1) so as to be secure against rotation during the friction welding procedure by means of the friction welding tool (130) in that following the pressing, the pressing section (6) continues to be held so as to be secure against rotation by press jaws of the pressing tool (110, 120).

10. Method according to Claim 9, **characterized in that** the lines (2) are guided through the receiving sleeve (5) such that the line ends accommodated therein are arranged substantially flush with one another.

11. Method according to either of Claims 9 and 10, **characterized in that** lines (2) of different materials are accommodated in the line connector (1).

12. Method according to one of Claims 9 to 11, **characterized in that** during the pressing in the pressing section (6), an exposed conductor (4) is brought into direct contact with the inner surface of the respective receiving sleeve (5) and, in an insulating sheath section (7), one or more clamping elements (18) in the form of protrusions projecting into the receiving sleeve (5) are brought into force-fitting and/or form-fitting engagement with an insulating sheath (3).

## Revendications

1. Connecteur de lignes (1) pour la connexion électrique les unes aux autres, de manière non amovible, de deux ou plus de deux lignes électriques (2), comportant au moins une douille de réception (5) métallique réalisée pour la réception, au moins dans certaines parties, des lignes (2), laquelle douille de réception présente au moins une première ouverture traversante (8) ainsi qu'une deuxième ouverture traversante (9) pour l'insertion d'un outil de soudage par friction (130) et au moins une partie de compression (6) disposée entre les ouvertures traversantes (8, 9), dans laquelle la douille de réception (5) peut être comprimée radialement et laquelle peut servir à la retenue, de manière bloquée en rotation, du connecteur de lignes (1) pendant l'opération de soudage par friction au moyen de l'outil de soudage par friction (130), le connecteur de lignes (1) présentant en outre deux douilles de réception (5) ou plus, qui sont connectées les unes aux autres par le biais d'au moins une partie de connexion (16) électroconductrice, **caractérisé en ce que** le connecteur de lignes (1) présente deux éléments formant coques (12, 13) se complétant sensiblement et **en ce que** les éléments formant coques (12, 13) peuvent être connectés l'un à l'autre par le biais d'un élément d'accouplement (14) disposé dans la partie de connexion (16), l'élément formant coque (12, 13) individuel formant respectivement une partie des douilles de réception (5).

2. Connecteur de lignes (1) selon la revendication 1, **caractérisé en ce qu'**au moins une douille de réception (5) présente au moins une troisième ouverture traversante (11) dont l'axe de trou est orienté transversalement à l'axe de trou de la première et/ou de la deuxième ouverture traversante (8, 9).

3. Connecteur de lignes (1) selon la revendication 2, **caractérisé en ce que** l'au moins une douille de réception (5) présente une quatrième ouverture traversante (15) dont l'axe de trou est orienté transversalement à l'axe de trou de la première et/ou de la deuxième ouverture traversante (8, 9).

4. Connecteur de lignes (1) selon la revendication 1, **caractérisé en ce que** le diamètre intérieur d'une première douille de réception (5) est différent du diamètre intérieur d'une deuxième douille de réception (5) .

5. Connecteur de lignes (1) selon l'une des revendications précédentes, **caractérisé en ce qu'**au moins une douille de réception (5) se rétrécit à partir de la première ouverture traversante (8) en direction de la deuxième ouverture traversante (9).

6. Connecteur de lignes (1) selon l'une des revendications précédentes, **caractérisé en ce qu'**au moins une douille de réception (5) présente au moins dans certaines parties un élément de serrage (18) pénétrant vers l'intérieur dans la douille de réception (5).

7. Connecteur de lignes (1) selon la revendication 1, **caractérisé en ce que** la partie de connexion (16) est configurée en forme de tôle.

8. Connecteur de lignes (1) selon la revendication 1, **caractérisé en ce que** la partie de connexion (16) présente un élément de contact ou de fixation (10) pour la mise en contact électrique ou la connexion mécanique avec une partie de support.

9. Procédé de fabrication d'une connexion électrique entre deux ou plus de deux lignes électriques (2), comportant les étapes suivantes :
- fourniture d'un connecteur de lignes (1) comportant au moins deux douille de réception (5) métalliques présentant respectivement deux ouvertures traversantes (8, 9, 11, 15), lesquelles douilles de réception sont connectées les unes aux autres par le biais d'au moins une partie de connexion (16) électroconductrice, le connecteur de lignes (1) présentant deux éléments formant coques (12, 13) se complétant sensiblement et les éléments formant coques (12, 13) pouvant être connectés l'un à l'autre par le biais d'un élément d'accouplement (14) disposé dans la partie de connexion (16), l'élément formant coque (12, 13) individuel formant respectivement une partie des douilles de réception (5),
- insertion, dans certaines parties, des lignes(2) dans au moins une douille de réception (5),
- compression radiale de l'au moins une douille de réception (5) au moyen d'un outil de compression (110, 120) dans une partie de compression (6) disposée entre les ouvertures traversantes (8, 9, 11, 15), et
- connexion par liaison de matière de la ligne (2) respective à la douille de réception (5) au moyen d'un outil de soudage par friction (130) qui est guidé jusqu'aux lignes (2) à travers au moins l'une des ouvertures traversantes (9, 11, 15) de l'au moins une douille de réception (5) et est ensuite tourné par rapport à celles-ci, la partie de compression (6) servant à la retenue, de manière bloquée en rotation, du connecteur de lignes (1) pendant l'opération de soudage par friction au moyen de l'outil de soudage par friction (130) par le fait qu'après la compression, la partie de compression (6) est retenue en outre de manière bloquée en rotation par des mâchoires de compression de l'outil de compression (110, 120).

10. Procédé selon la revendication 9, **caractérisé en ce que** les lignes (2) sont guidées à travers la douille de réception (5) de telle sorte que les extrémités de lignes reçues dans celle-ci soient disposées sensiblement en alignement les unes par rapport aux autres.

11. Procédé selon l'une des revendications 9 ou 10, **caractérisé en ce que** des lignes (2) de différentes matières sont reçues dans le connecteur de lignes (1).

12. Procédé selon l'une des revendications 9 à 11, **caractérisé en ce que**, lors de la compression dans la partie de compression (6), une ligne (4) dénudée est amenée en appui direct contre la surface intérieure de la douille de réception (5) respective et, dans une partie d'enveloppe d'isolation (7), un ou plusieurs éléments de serrage (18) sous la forme de saillies pénétrant dans la douille de réception (5) sont amenés en prise par force et/ou par complémentarité de formes avec une enveloppe d'isolation (3).
